(19) Europäisches Patentamt
European Patent Office
Office européen des brevets

(11) **EP 1 887 051 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(51) Int Cl.:
***C09C 1/52*** *(2006.01)*

(21) Anmeldenummer: 07112149.5

(22) Anmeldetag: **10.07.2007**

(54) **Ruß, Verfahren zur Herstellung von Ruß und Vorrichtung zur Durchführung des Verfahrens**

Carbon black, method for manufacturing carbon black and device for performing the method

Rouille, procédé destiné à la fabrication de la rouille et dispositif destiné à la réalisation du procédé

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **07.08.2006 DE 102006037079**

(43) Veröffentlichungstag der Anmeldung:
**13.02.2008 Patentblatt 2008/07**

(73) Patentinhaber: **Evonik Carbon Black GmbH**
**63457 Hanau (DE)**

(72) Erfinder:
• **Quitmann, Catharina**
**50937 Köln (DE)**
• **Karl, Alfons, Dr.**
**63584 Gründau (DE)**
• **Katzer, Matthias**
**36381 Schlüchtern (DE)**
• **Krauß, Kai, Dr.**
**63538 Großkrotzenburg (DE)**

• **Stanyschöfsky, Michael**
**50354 Hürth (DE)**

(74) Vertreter: **Polypatent**
**Braunsberger Feld 29**
**51429 Bergisch Gladbach (DE)**

(56) Entgegenhaltungen:
WO-A-2005/033217      DE-C- 203 711
US-B1- 6 228 928      US-B1- 6 358 487

• **W. GERHARTZ, Y.S. YAMAMOTO (ED.): "5.4.2. Gas Black and Channel Black" ULLMANN'S ENCYCLOPEDIA OF INDUSTRIAL CHEMISTRY, Bd. A5, 1086, Seiten 148-150, XP002465931 Weinheim**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einen Ruß, ein Verfahren zur Herstellung von Ruß sowie eine Vorrichtung zur Durchführung des Verfahrens.

Aus DE 2404536 ist ein Verfahren zur Herstellung von extraktarmen Gasrußen bekannt, wobei man als Traggas für den Rußöldampf wasserstoffreiche Gemische einsetzt und den an der Kühlwalze abgeschiedenen Ruß sammelt. Diese Gasruße haben einen Extraktgehalt unter 0,100 Gew.-%.

Ferner sind aus WO 2005/033217 ungesichtete, unbehandelte Ruße mit einem pH-Wert kleiner gleich 6,0, einem Glührückstand kleiner gleich 0,1 % und einem 5 $\mu$m-Siebrückstand kleiner gleich 200 ppm bekannt. Diese Ruße werden hergestellt durch die Verfahrensschritte Entzug der Wärme aus der Flamme durch Wärmeleitung und/oder -strahlung, Ausbildung einer dünnen Gasgrenzschicht und Beschleunigung bzw. Dehnung der von der Flamme und der Grenzschicht gebildeten Strömung.

Nachteil der bekannten Ruße ist der schlechte Farbtonbeitrag bei Lackanwendungen.

Aufgabe der Erfindung ist es einen Ruß zur Verfügung zu stellen, der einen hohen positiven Farbtonbeitrag in Lackanwendungen aufweist. Eine weitere Aufgabe der Erfindung ist es, ein Verfahren zur Verfügung zu stellen, welches der Flamme möglichst viel Wärme entzieht, ohne dass sich der so gebildete Ruß auf der kalten Oberfläche anlagern kann.

Gegenstand der Erfindung ist ein Ruß, welcher dadurch gekennzeichnet ist, dass die Aggregatgrößenverteilung ein $(d_{90}-d_{10})/d_{50}$ Verhältnis von kleiner oder gleich 1,1, bevorzugt kleiner 0,8, besonders bevorzugt kleiner 0,65, hat.

Der erfindungsgemäße Ruß kann einen Gehalt an Oberflächenoxiden von größer 50 mmol/kg, vorzugsweise größer 100 mmol/kg, besonders bevorzugt größer 120 mmol/kg, haben.

Der erfindungsgemäße Ruß kann eine Aggregatgrößenverteilung mit einem Verhältnis von Halbwertsbreite (FWHM) zu $D_{mode}$ von kleiner oder gleich 0,6, vorzugsweise kleiner 0,58, besonders bevorzugt kleiner 0,56, haben.

Der erfindungsgemäße Ruß kann ein Gasruß sein.

Der pH-Wert der erfindungsgemäßen Ruße kann < 7,0, vorzugsweise < 6,0, besonders bevorzugt < 5,0, sein.

Der erfindungsgemäße Ruß kann einen STSA-Wert von 20-300 $m^2$/g, vorzugsweise von 50-220 $m^2$/g, besonders bevorzugt von 70-200 $m^2$/g, haben.

Der erfindungsgemäße Ruß kann einen Gehalt an flüchtigen Bestandteilen von 2,0-20,0 %, vorzugsweise von 3,0-12 %, besonders bevorzugt von 4,0-9,0 %, haben.

Der erfindungsgemäße Ruß kann einen Tint von 90-180 %, vorzugsweise von 105-160 %, besonders bevorzugt von 120-150 %, haben.

Ein weiterer Gegenstand der Erfindung ist ein Verfahren zur Herstellung des erfindungsgemäßen Rußes, welches dadurch gekennzeichnet ist, dass man ein Gasgemisch, enthaltend ein Traggas und einen Rußrohstoff, gegebenenfalls mit Heißluft versetzt, das Gasgemisch in ein Brennerrohr leitet, das Gasgemisch an den Brennerrohröffnungen verbrennt und die Flammen gemeinsam mit der von außen frei angesaugten Umgebungsluft durch einen gekühlten, sich verengenden Spalt saugt und kühlt, wobei der gekühlte, sich verengende Spalt ein Höhen (h) zu Breiten (b) Verhältnis von 1-100, vorzugsweise 5-50, besonders bevorzugt 10-40, wobei die Breite auf die Oberkante des Spaltes bezogen ist, hat, die Breite (b) 0,5 bis 10 mm, vorzugsweise 1 bis 5 mm, ist und die Strömungsgeschwindigkeit an der engsten Stelle des Spaltes 10 - 200 m/s, vorzugsweise 15 - 150 m/s, besonders bevorzugt 20 - 100 m/s, ist.

Die Strömungsgeschwindigkeit kann aus dem Quotienten Prozessgasmenge zur Spaltfläche berechnet werden. Die Prozessgasmenge ist das über das Gebläse abgesaugte Gasvolumen. Die Spaltfläche ergibt sich aus dem Produkt von Spaltbreite b und Oberkante $A^1A^2$ des gekühlten, sich verengenden Spaltes.

Als Kühlmittel für den sich verengenden Spalt kann Wasser, Luft, Dampf und Wärmeträgeröl eingesetzt werden.

In einem handelsüblichen Dünnschichtverdampfer kann der Rußrohstoff erhitzt und verdampft werden. Der Rußrohstoffdampf wird von einem Traggasstrom einem Brennerrohr zugeführt. Unmittelbar vor dem Brennerrohr (beispielsweise beschrieben in DE-PS 671739) kann dem Gasgemisch Heißluft mit Temperaturen von bis zu 400 °C zugemischt und den Flammen zugeführt werden. Der erzeugte Ruß kann in handelsüblichen Filteranlagen abgeschieden werden.

Als Rußrohstoff können kohlenstoffhaltige Gase oder kohlenstoffhaltige, verdampfbare Flüssigkeiten eingesetzt werden. Als Rußrohstoff können Kohlenwasserstoffe, beispielsweise Acetylen, Methan, Ethylen, Ethan, Propan, Butan oder Pentan, oder Rußöl, eingesetzt werden. Rußöl kann petrochemischen oder carbochemischen Ursprungs sein. Als Rußrohstoff kann ein Gemisch von Kohlenwasserstoffen und/oder Rußölen eingesetzt werden.

Der gasförmige oder verdampfte Rußrohstoff kann eine Temperatur von bis zu 400 °C, vorzugsweise 250 - 400 °C, besonders bevorzugt 250 - 350 °C, haben.

Als Traggas kann man brennbare Gase, vorzugsweise Gasgemische mit einem Wasserstoffanteil >50 Vol.-%, besonders bevorzugt >60 Vol.-%, einsetzen.

Die Traggastemperatur und Heißlufttemperatur kann mindestens der Temperatur des gasförmigen oder verdampften Rußrohstoffes entsprechen, um Kondensationen zu verhindern.

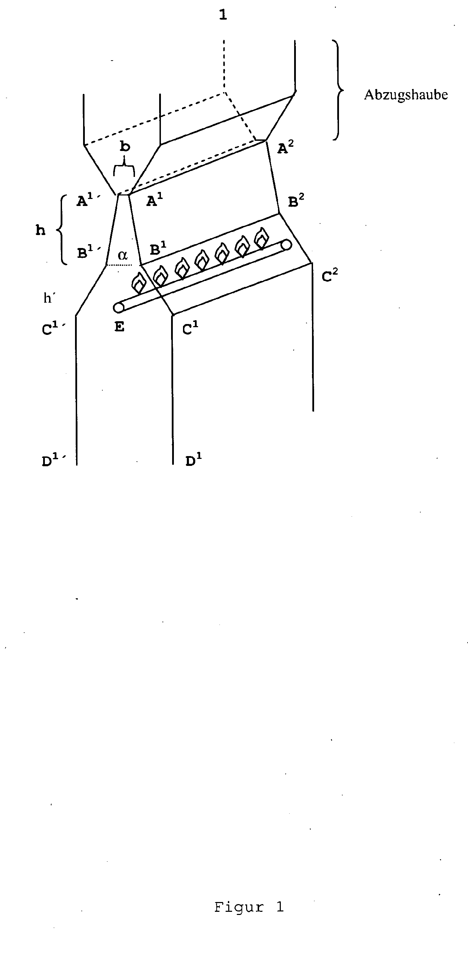

Figur 1 zeigt den schematischen Aufbau des Apparates in der bedeuten:

$A^1A^2$, $A^{1'}A^{2'}$     Oberkante des gekühlten, sich verengenden Spalts,

$B^1B^2$, $B^{1'}B^{2'}$     Unterkante des gekühlten, sich verengenden Spalts,

$A^{1'}A^1$, $A^{2'}A^2$     engste Stelle des gekühlten, sich verengenden Spalts,

b     Breite des Kühlspalts = $A^{1'}A^1$ bzw. $A^{2'}A^2$,

$B^{1'}B^1$, $B^{2'}B^2$     weiteste Stelle, des gekühlten, sich verengenden Spalts,

h     Höhe des gekühlten, sich verengenden Spalts im oberen Bereich,

h'     Höhe der gegebenenfalls gekühlten, schräg zulaufenden Seitenwände,

$C^1B^1B^2C^2$     gegebenenfalls gekühlte, schräg zulaufende Seitenwand

$C^{1'}B^{1'}B^{2'}C^{2'}$     gegebenenfalls gekühlte, schräg zulaufende Seitenwand

$D^{1'}D^1$     Breite des vertikal aufgestellten Apparats,

E     in der Höhe verstellbares Brennerrohr.

E, $A^1A^{1'}$     Brennerabstand

Der Winkel $\alpha$ kann 70° bis 89°, vorzugsweise 80° bis 89°, besonders bevorzugt 83° bis 88°, sein.

Die Höhe h' kann 0 bis 250 mm, vorzugsweise 100 bis 250 mm, besonders bevorzugt 140 bis 180 mm, sein.

Die Breite des vertikal aufgestellten Apparats ($C^{1'}C^1$ = $D^{1'}D^1$) kann 100 bis 500 mm, vorzugsweise 150 bis 210 mm, betragen.

Die Abzugshaube kann direkt an den Spalt anschließen und kann mit einem Absauggebläse verbunden sein.

Der Apparat kann aus Edelstahl gefertigt sein, um die typische Verunreinigung (Grit) zu vermeiden. Bei dem erfindungsgemäßen Verfahren kann auf eine drehende Kühlwalze verzichtet werden. Die Flammen des Brennerrohrs können durch einen wassergekühlten, sich verengenden Spalt gesaugt und gekühlt werden.

Wie in der Schnittzeichnung des erfindungsgemäßen Apparates (Figur 1) gezeigt kann sich der Spalt über die Gesamtlänge des Apparates erstrecken und kann parallel zum Brennerrohr verlaufen, d.h. er kann vorzugsweise zentriert oberhalb des Brennerrohrs angeordnet sein. Die Seitenwände des vertikal aufgestellten Apparates können zunächst parallel zueinander verlaufen ($C^1D^1D^2C^2$ bzw. $C^{1'}D^1D^{2'}C^{2'}$), anschließend schräg aufeinander zulaufen ($C^1B^1B^2C^2$ bzw. $C^{1'}B^{1'}B^{2'}C^{2'}$) und in dem gekühlten, sich verengenden Spalt ($A^1B^1B^2A^2$ bzw. $A^{1'}B^{1'}B^{2'}A^{2'}$) münden.

Der Brennerabstand zum gekühlten, sich verengenden Spalt kann variabel eingestellt werden. Diese Verstellmöglichkeit kann vorgesehen werden um die Einstellung einer optimalen Brennerhöhe realisieren zu können.

Im konisch zulaufenden Bereich (h') des Apparates können die Seitenwände wassergekühlt sein. Allerdings kann dies im Bereich (h') auch nur zum Schutz des Materials vor der Flammentemperatur dienen, denn erst im oberen Bereich (h), dem entsprechend benannten Kühlspalt, soll die Abkühlung des Reaktionsgemisches erfolgen.

Die Konstruktion des Kühlspalts kann so gestaltet sein, dass durch die Erzeugung einer laminaren Grenzschicht am Kühlspalt die Anlagerung von Ruß verhindert werden kann.

Dem Rußöl können Additive zugesetzt werden. Additive können eine Lösung von Salz in Wasser, Alkohol, Öl oder deren Mischungen sein. Die Additive können in ein Aerosol überführt werden. Vorzugsweise kann als Salz Kaliumcarbonat eingesetzt werden.

Ein weiterer Gegenstand der Erfindung ist eine Vorrichtung zur Durchführung des erfindungsgemäßen Verfahrens mit einem Brenner und eine kühlende Oberfläche gegen die die Flamme gerichtet ist, welche dadurch gekennzeichnet ist, dass der gekühlte, sich verengende Spalt ein Höhen (h) zu Breiten (b) Verhältnis von 1-100, vorzugsweise 5-50, besonders bevorzugt 10-40, wobei die Breite auf die Oberkante des Spaltes bezogen ist, hat, die Breite (b) 0,5 bis 10 mm, vorzugsweise 1 bis 5 mm, ist und die Strömungsgeschwindigkeit an der engsten Stelle des Spaltes 10 - 200 m/s, vorzugsweise 15 - 150 m/s, besonders bevorzugt 20 - 100 m/s, ist.

Die erfindungsgemäßen Ruße können als Füllstoff, Verstärkerfüllstoff, UV-Stabilisator, Leitfähigkeitsruß oder Pigment verwendet werden. Die erfindungsgemäßen Ruße können in Kautschuk, Kunststoff, Druckfarben, Tinten, Inkjet-Tinten, Tonern, Lacken, Farben, Papier, Bitumen, Beton und anderen Baustoffen eingesetzt werden. Die erfindungsgemäßen Ruße können als Reduktionsmittel in der Metallurgie angewendet werden.

Die erfindungsgemäßen Ruße haben den Vorteil, dass Ruße mit enger Aggregatgrößenvertelung hergestellt

werden können und der absolute Farbtonbeitrag (dM) in Lackanwendungen sehr hoch ist.

Das erfindungsgemäße Verfahren hat den Vorteil, dass sich der Ruß nicht an den gekühlten Flächen abscheidet und somit außerhalb der Vorrichtung abgeschieden werden kann.

Ein weiterer Vorteil ist, dass sich im erfindungsgemäßen Apparat keine drehenden Teile mehr befinden, was die Investitions- und Instandhaltungskosten senkt, und eine Trennung von Walzenruß und Filterruß nicht mehr stattfindet, somit eine Homogenisierung des erzeugten Produktes erfolgt. Durch den Wegfall der mechanischen Förderung kann außerdem eine Senkung der Verunreinigungen im Produkt erzielt werden.

Beispiele

Der in den Beispielen verwendete erfindungsgemäße Apparat gemäß Figur 1 hat einen Abstand der Seitenwände von 177 mm ($D^1D^1$) und eine Höhe von 600 mm ($D^1C^1$). Oberhalb der Höhe von 600 mm laufen die Seitenwände schräg aufeinander zu und münden in dem gekühlten, sich verengenden Spalt. In den folgenden Beispielen beträgt die Länge $A^1A^2$ dieses Kühlspalts 2000 mm und die Höhe (h) 50 mm. Die Höhe (h') des Spalts in den folgenden Beispielen beträgt 159 mm. Der Winkel $\alpha$ ist 87°.

**Bestimmungsmethoden**

**pH-Wert**

Die Bestimmung des pH-Wertes wird nach DIN EN ISO 787-9 20 durchgeführt.

**Flüchtige Anteile**

Die Bestimmung der flüchtigen Anteile bei 950°C wird nach DIN 53552 durchgeführt.

**BET-Oberfläche**

Die Bestimmung der BET-Oberfläche wird nach ASTM D-6556-00 durchgeführt.

**STSA-Oberfläche**

Die Bestimmung der STSA-Oberfläche wird nach ASTM Vorschrift D-6556-00 durchgeführt.

**Tint**

Die Bestimmung der Tint Strength wird nach ASTM Vorschrift D-3265 durchgeführt.

**Aggregatgrößenverteilung**

Zur Messung der Aggregatgrößenverteilungskurven wird eine Scheibenzentrifuge BI-DCP mit Rotlicht-Diode der Firma Brookhaven verwendet. Dieses Gerät wird speziell für die Bestimmung von Aggregatgrößenverteilungskurven von feinteiligen Feststoffen aus Extinktionsmessungen entwickelt und ist mit einem automatischen Mess- und Auswertungsprogramm zur Ermittlung der Aggregatgrößenverteilung ausgerüstet.

Zur Durchführung der Messungen wird zunächst eine Dispersionslösung aus 200 ml Ethanol, 5 Tropfen Ammoniaklösung und 0,5 g Triton X-100 und Auffüllen mit demineralisiertem Wasser auf 1000 ml hergestellt. Weiterhin wird eine Spinflüssigkeit aus 0,5 g Triton X-100, 5 Tropfen Ammoniaklösung und Auffüllen mit demineralisiertem Wasser auf 1000 ml angefertigt.

Danach werden 20 mg Ruß mit 20 ml Dispersionslösung versetzt und in einem Kühlbad für die Dauer von 4,5 Minuten mit 100 Watt Ultraschalleistung (80% Pulse) in der Lösung suspendiert.

Vor Beginn der eigentlichen Messungen wird die Zentrifuge 30 Minuten bei einer Drehzahl von 11000 min$^{-1}$ betrieben. In die sich drehende Scheibe wird 1 ml Ethanol eingespritzt und danach vorsichtig mit 15 ml Spinflüssigkeit unterschichtet. Nach etwa einer Minute werden 250 $\mu$l der Rußsuspension eingespritzt, das Messprogramm des Gerätes gestartet und die Spinflüssigkeit in der Zentrifuge mit 50 $\mu$l Dodecan überschichtet. Von jeder zu messenden Probe wird eine Doppelbestimmung vorgenommen.

Die Auswertung der Rohdatenkurve erfolgt dann mit dem Rechenprogramm des Gerätes unter Berücksichtigung der Streulichtkorrektur und mit automatischer Anpassung der Basislinie.

Der $\Delta D_{50}$-Wert (FWHM) ist die Breite der Aggregatgrößenverteilungskurve bei der halben Peakhöhe. Der

$D_{mode}$-Wert (Modalwert) ist die Aggregatgröße mit der größten Häufigkeit (Peakmaximum der Aggregatgrößenverteilungskurve). Die Werte $d_{10}$, $d_{50}$ und $d_{90}$ sind die Aggregatgrößen, die aus der kumulierten Kurve bei einem Volumenanteil von 10%, 50% bzw. 90% ermittelt werden.

**Oberflächenoxide**

Zur Charakterisierung und zur quantitativen Bestimmung von Oberflächenoxiden auf der Rußoberfläche, d.h. hier sauerstoffhaltiger funktioneller Gruppen wie Carboxyl-, Lactol- und Phenol-Gruppen:

Die Rußeinwaage $m_E$ richtet sich nach der Anzahl der zu erwartenden Oberflächenoxide. Als Anhaltspunkt für die Einwaage kann der Gehalt des Rußes an flüchtigen Bestandteilen herangezogen werden (Tabelle 1).

Tabelle 1:

| Gehalt an flüchtigen Bestandteilen in Gew.-% | Rußeinwaage $m_E$ in g | Gehalt an flüchtigen Bestandteilen in Gew.-% | Rußeinwaage $m_E$ in g |
|---|---|---|---|
| 1 | 5 | 16-17 | 1 |
| 2 | 4,5 | 18-19 | 0,9 |
| 3-6 | 4 | 20-23 | 0,8 |
| 7-9 | 3 | 24 | 0,7 |
| 10-11 | 2 | 25 | 0,6 |
| 12-15 | 1,5 | 26 | 0,5 |

Die bei 105 °C getrocknete in der Tabelle 1 angegebene Rußmenge wird auf 0,1 mg genau in ein Zentrifugenglas eingewogen und mit 25 ml (Volumen $V_1$) einer 0,05 m Natronlauge versetzt. Die Luft im Zentrifugenglas über der Probe wird durch Stickstoff verdrängt, das Probenglas dicht verschlossen, in eine Haltevorrichtung eingesetzt und über Nacht in einer Rotationsmaschine gemischt.

Nach Beendigung des Mischvorganges wird der Inhalt in ein anderes Zentrifugenglas umgefüllt und mind. 1 min lang zentrifugiert.

Von der überstehenden Lösung werden 10 ml (Volumen $V_2$) abpipettiert und in ein Becherglas überführt, mit 20 ml einer 0,025 m Schwefelsäurelösung versetzt und zum Austreiben von Carbonat kurz aufgekocht.

Anschließend wird die Proben mit 0,05 m Natronlauge auf pH 6,5 (pH-Elektrode) zurücktitriert. Der Verbrauch an Natronlauge entspricht $V_3$.

In entsprechender Weise muss eine Blindprobe angefertigt werden. Für die Blindwertbestimmung erhält man analog den NaOH-Verbrauch $BW_3$.

Auf Basis der Rußeinwaage $m_E$, der Volumina $V_{1-3}$ und $BW_3$ wird der Gehalt an Oberflächenoxiden G in mmol/kg nach folgender Gleichung

$$G = \frac{V_1 \cdot (V_3 - BW_3)}{V_2 \cdot m_e} \cdot 0,05 \left[ \frac{mol}{l} \right] \cdot 1000$$

berechnet.

In dieser Formel bedeutet:

$m_E$      Rußeinwaage in g,
$V_1$      Volumen in ml der Reagenzlösungen (= 25 ml), die dem Ruß zugesetzt werden,
$V_2$      Volumen in ml der abpipettierten Probelösung (=10 ml),
$V_3$      Verbrauch in ml an Natronlauge zur Titration ,
$BW_3$      Verbrauch in ml an Natronlauge zur Blindwerttitration.

**Relative Schwarzzahl My und absoluter Farbtonbeitrag dM**

Beschreibung / Durchführung

1. Herstellen der Reagenzien

Rezeptur Verdünner

| Bestandteile | in g | in Gew.-% |
|---|---|---|
| Xylol | 1125 | 68,20 |
| Ethoxypropanol | 225 | 13,63 |
| Butanol | 150 | 9,09 |
| Baysilon OL 17, 10 %ig in Xylol | 75 | 4,54 |
| Butylglycol | 75 | 4,54 |
| **Gesamt** | **1.650** | **100,00** |

Rezeptur Baysilon

| Bestandteile | in g | in Gew.-% |
|---|---|---|
| Baysilon OL 17 | 10 | 10 |
| Xylol | 90 | 90 |
| **Gesamt** | **100** | **100** |

Komponente A

| Bestandteile | in g | in Gew.-% |
|---|---|---|
| Alkydal F 310, 60 %ig | 770 | 77 |
| Verdünner | 230 | 23 |
| **Gesamt** | **1.000** | **100** |

Komponente B

| Bestandteile | in g | in Gew.-% |
|---|---|---|
| Maprenal MF800, 55 %ig | 770 | 77 |
| Verdünner | 230 | 23 |
| **Gesamt** | **1.000** | **100** |

Die Bestandteile der 4 Rezepturen werden gemischt und in einem geeigneten Gefäß aufbewahrt.

2. Präparation des Schwarzlackes

Rezeptur des Schwarzlackes zur Bestimmung der Schwarzzahl My:

| Bestandteile | in g | in Gew.-% |
|---|---|---|
| Standard-Klarlack Komponente A | 27,3 | 65,3 |
| Standard-Klarlack Komponente B | 12,7 | 30,4 |
| Pigmentruß | 1,8 | 4,3 |
| **Gesamt** | **41,8** | **100** |

Zunächst werden die Lackkomponenten A und B in einen PTFE-Becher eingewogen, dann der bei 105 °C getrocknete Pigmentruß zugewogen und 275 g Stahlkugeln (Ø = 3 mm) als Mahlkörper zugegeben. Schließlich wird die Probe in einem Skandexmischer 30 Minuten dispergiert.

Nach dem Dispergiervorgang wird ca. 1 - 2 ml Schwarzlack für den Aufstrich abgenommen und in einem Streifen von 5 cm Länge und ca. 1 cm Breite auf die Trägerplatte aufgetragen. Es ist darauf zu achten, dass sich im Lackstreifen keine Luftblasen befinden. Die Lackhantel wird über dem Lackstreifen aufgesetzt und gleichmäßig über die Platte gezogen. Es wird ein Aufstrich erzeugt, der ungefähr 10 cm lang und 6 cm breit ist. Der Lackaufstrich muss (im Abzug) mindestens 10 Minuten ablüften.

Anschließend wird die Probe in einem Trockner für 30 Minuten bei 130 °C eingebrannt. Die Proben können sofort nach dem Abkühlen oder später gemessen werden. Die Messungen können mit dem Messgerät: Pausch Q-Color 35, Software: WinQC+, durchgeführt werden. Die Messung erfolgt durch das Glas.

3. Berechnungen

3.1 Formeln und Konstanten

3.1.1 Farbtonunabhängige Schwarzzahl My und farbtonabhängige Schwarzzahl Mc

Aus dem Normfarbwert Y der Messung (Lichtart D65/10) wird zunächst die farbtonunabhängige Schwarzzahl My (Gleichung

1) berechnet:

$$(1) \quad My = 100 \cdot \log\left(\frac{100}{Y}\right)$$

Anschließend wird die farbtonabhängige Schwarzzahl (Gleichung 2) berechnet:

$$(2) \quad Mc = 100 \cdot \left(\log\left(\frac{X_n}{X}\right) - \log\left(\frac{Z_n}{Z}\right) + \log\left(\frac{Y_n}{Y}\right)\right)$$

$X_n / Z_n / Y_n$ (DIN 6174) = Normfarbwerte des Koordinatenursprungs, bezogen auf die Lichtart und den Beobachter (DIN 5033 / Teil 7, Lichtart D65/10°)

$$X_n = 94,81 \qquad Z_n = 107,34 \qquad Y_n = 100,0$$

X / Y / Z = Normfarbwerte, die aus den Messungen der Probekörper berechnet werden.

3.1.2 Absoluter Farbtonbeitrag dM

Aus den Schwarzzahlen Mc und My wird der Absolute Farbtonbeitrag dM (Gleichung 3) berechnet:

$$(3) \quad dM = Mc - My$$

**Beispiel 1-10:**

Die Einstellungen zur Herstellung der Beispiele für die erfindungsgemäßen Ruße und des Vergleichsbeispiels 6 sind in der Tabelle 2 aufgeführt. Es wird eine Vorrichtung gemäß der Figur 1 verwendet.
Bei den erfindungsgemäßen Beispielen und dem Vergleichsbeispiel 6 betragen die Heißlufttemperatur 310 °C und der Wasserstoffgehalt des Traggases 92-99 Vol.-%.
Der in Tabelle 2 angegebene Brennerabstand gibt den Abstand der Brennerrohroberkante, also der Stelle an der das Öldampf-Traggasgemisch austritt, zur Oberkante des gekühlten, sich verengenden Kühlspalts wieder.
In der darauf folgenden Tabelle 3 sind die analytischen Daten der erfindungsgemäßen Ruße sowie eines Vergleichsrußes dargestellt. Als Vergleichsruß (Beispiel 7) wird das Beispiel 3 aus WO 2005/033217 verwendet.

Tabelle 2:

| Beispiel | Spaltmaße Höhe: Breite | Spaltbreite b | Brennerabstand | Heißluft | Traggasmenge | Öldampfmenge | Prozeßgasmenge | Strömungsgeschwindig keit |
|---|---|---|---|---|---|---|---|---|
| | mm | | [mm] | [Nm$^3$/h] | [Nm$^3$/h] | [kg/h] | [Nm$^3$/h] | [m/s] |
| 1 | 12,5 | 4 | 171 | 9 | 3 | 3 | 650 | 22,6 |
| 2 | 25 | 2 | 181 | 14 | 4 | 3,2 | 650 | 45,1 |
| 3 | 25 | 2 | 171 | 14 | 3 | 3,2 | 650 | 45,1 |
| 4 | 25 | 2 | 181 | 18 | 4 | 3,2 | 650 | 45,1 |
| 5 | 33 | 1,5 | 181 | 17 | 4 | 3,2 | 650 | 60,2 |
| 6 | 12,5 | 4 | 171 | 9 | 4 | 3 | 250 | 8,7 |

(Vergleichsbeispiel)

EP 1 887 051 B1

Tabelle 3:

| Beispiel | BET [m²/g] | STSA [m²/g] | Flüchtige (950 °C) [%] | pH-Wert | Tint [%] | Oberflächenoxide [mmol/kg] | Lack My | Lack dM | $(d_{90}-d_{10})/d_{50}$ | FWHM /$D_{mode}$ |
|---|---|---|---|---|---|---|---|---|---|---|
| 1 | 93,1 | 76,1 | 4,8 | 3 | 120,5 | 130 | 251 | 4,2 | 0,57 | 0,55 |
| 2 | 142,9 | 118,7 | 4,3 | 3,6 | 141,3 | 170 | 284 | 15 | 0,58 | 0,55 |
| 3 | 169,5 | 132,2 | 4,5 | 3,4 | 142,6 | 200 | 293 | 18,5 | 0,60 | 0,54 |
| 4 | 274 | 190,9 | 8,76 | 3,07 | 146,6 | 320 | 282 | 2,3 | 0,64 | 0,60 |
| 5 | 274,8 | 192,3 | 7,75 | 3,1 | 141,3 | 290 | 284 | 4,4 | 0,64 | 0,58 |
| 6 (Vergleichsbeispiel) | Versuch wegen Rußablagerung im gekühlten, sich verengenden Spalt abgebrochen | | | | | | | | | |
| 7 (Vergleichsbeispiel) | 316,6 | 244,2 | 4,62 | 3,9 | | 220 | 291 | -0,8 | 1,35 | 0,63 |

Die Ergebnisse zeigen, dass die erfindungsgemäßen Ruße (Beispiele 1-5) eine Aggregatgrößenverteilung mit einem $(d_{90}-d_{10})/d_{50}$ Verhältnis von kleiner oder gleich 1,1 haben. Der Vorteil der erfindungsgemäßen Ruße äußert sich in einem dM-Wert von > 0,5 und einem daraus resultierenden höheren blauen Farbton.

**Patentansprüche**

1. Ruß, **dadurch gekennzeichnet, dass** die Aggregatgrößenverteilung ein $(d_{90}-d_{10})/d_{50}$ Verhältnis von kleiner oder gleich 1,1 hat.

2. Ruß gemäß Anspruch 1, **dadurch gekennzeichnet, dass** die Aggregatgrößenverteilung ein Verhältnis der Halbwertsbreite (FWHM) zu $D_{mode}$ von kleiner oder gleich 0,6 hat.

3. Ruß gemäß Anspruch 1 und 2, **dadurch gekennzeichnet, dass** der Gehalt an Oberflächenoxiden größer 50 mmol/kg ist.

4. Verfahren zur Herstellung von Ruß gemäß Anspruch 1, **dadurch gekennzeichnet, dass** man ein Gasgemisch, enthaltend ein Traggas und ein Rußrohstoff, gegebenenfalls mit Heißluft versetzt, das Gasgemisch in ein Brennerrohr leitet, das Gasgemisch an den Brennerrohröffnungen verbrennt und die Flammen gemeinsam mit der von außen frei angesaugten Umgebungsluft durch einen gekühlten, sich verengenden Spalt saugt und kühlt, wobei der gekühlte, sich verengende Spalt ein Höhen (h) zu Breiten (b) Verhältnis von 1-100 hat, wobei die Breite auf die Oberkante des Spaltes bezogen ist, die Breite (b) 0,5 bis 10 mm ist und die Strömungsgeschwindigkeit an der engsten Stelle des Spaltes 10 - 200 m/s ist.

5. Vorrichtung zur Durchführung des Verfahrens nach Anspruch 4 mit einem Brenner und eine kühlende Oberfläche gegen die die Flamme gerichtet ist, **dadurch gekennzeichnet, dass** der gekühlte, sich verengende Spalt ein Höhen (h) zu Breiten (b) Verhältnis von 1-100 hat, wobei die Breite auf die Oberkante des Spaltes bezogen ist, die Breite (b) 0,5 bis 10 mm ist und die Strömungsgeschwindigkeit an der engsten Stelle des Spaltes 10 - 200 m/s ist.

6. Verwendung der Ruße gemäß Anspruch 1 als Füllstoff, Verstärkerfüllstoff, UV-Stabilisator, Leitfähigkeitsruß, Pigment oder Reduktionsmittel.

7. Verwendung der Ruße gemäß Anspruch 1 in Kautschuk, Kunststoff, Druckfarben, Tinten, Inkjet-Tinten, Tonern, Lacken, Farben, Papier, Bitumen, Beton und anderen Baustoffen.

**Claims**

1. Carbon black **characterized in that** the aggregate size distribution has a $(d_{90}-d_{10})/d_{50}$ ratio of less than or equal to 1.1.

2. Carbon black according to Claim 1, **characterized in that** the aggregate size distribution has a full width at half-maximum (FWHM) to $D_{mode}$ ratio of less than or equal to 0.6.

3. Carbon black according to Claim 1 and 2, **characterized in that** the surface oxide content is greater than 50 mmol/kg.

4. A method of producing carbon black according to Claim 1, **characterized in that** a gas mixture comprising a carrier gas and a carbon black feedstock is optionally admixed with hot air, the gas mixture is passed into a burner pipe, the gas mixture burns at the burner pipe openings, and the flames, together with the ambient air drawn in freely under suction from outside, are sucked through a cooled, narrowing gap and cooled, wherein the cooled, narrowing gap has a height (h) to width (b) ratio of 1-100, the width being based on the top edge of the gap, the width (b) is 0.5 to 10 mm, and the flow rate at the narrowest point of the gap is 10 - 200 m/s.

5. A device for implementing the method according to Claim 4, having a burner and a cooling surface against which the flame is directed, **characterized in that** the cooled, narrowing gap has a height (h) to width (b) ratio of 1-100, the width being based on the top edge of the gap, the width (b) is 0.5 to 10 mm, and the flow rate at the narrowest point of the gap is 10 - 200 m/s.

6. Use of the carbon blacks according to Claim 1 as filler, reinforcing filler, UV stabilizer, conductive carbon black, pigment or reducing agent.

7. Use of the carbon blacks according to Claim 1 in rubber, plastic, printing inks, inks, inkjet inks, toners, coating materials, paints, paper, bitumen, concrete and other building materials.


**Revendications**

1. Noir de carbone,
   **caractérisé en ce que**
   la répartition dimensionnelle des granulés présente un rapport $(d_{90}-d_{10})/d_{50}$ inférieur ou égal à 1,1.

2. Noir de carbone conforme à la revendication 1,
   **caractérisé en ce que**
   la répartition dimensionnelle des granulés présente un rapport de la largeur de valeur moyenne (FWHM) à $D_{mode}$ inférieur ou égal à 0,6.

3. Noir de carbone conforme à la revendication 1 et à la revendication 2,
   **caractérisé en ce que**
   la teneur en oxydes surfaciques est supérieure à 50 mmol/kg.

4. Procédé d'obtention de noir de carbone conforme à la revendication 1,
   **caractérisé en ce qu'**
   on fait le cas échéant réagir un mélange gazeux renfermant un gaz porteur et une matière première pour noir de carbone avec de l'air chaud, on transfère le mélange gazeux dans un brûleur tubulaire, on carbonise le mélange gazeux au niveau des ouvertures du brûleur tubulaire, et on aspire et refroidit conjointement les flammes avec l'air environnant librement aspiré de l'extérieur par une fente refroidie allant en se rétrécissant, la fente refroidie allant en se rétrécissant présentant un rapport hauteur (h)/largeur (b) de 1 à 100, la largeur étant rapportée au bord supérieur de la fente, la largeur (b) étant égale à 0,5 à 10 mm, et la vitesse du flux au niveau du point le plus étroit de la fente étant de 10 à 200 m/s.

5. Dispositif pour la mise en oeuvre du procédé conforme à la revendication 4, comprenant un brûleur et une surface réfrigérante contre laquelle la flamme est dirigée,
   **caractérisé en ce que**
   la fente refroidie allant en se rétrécissant, présente un rapport hauteur (h)/largeur (b) de 1 à 100, la largeur étant rapportée au bord supérieur de la fente, la largeur (b) étant égale à 0,5 à 10 mm et la vitesse du flux au niveau du point le plus étroit de la fente étant de 10 à 200 m/s.

6. Utilisation du noir de carbone conforme à la revendication 1 en tant que charge, charge de renforcement, agent de stabilisation aux UV, noir de carbone conducteur, pigment ou agent réducteur.

7. Utilisation du noir de carbone conforme à la revendication 1 dans du caoutchouc, des matières plastiques, des encres d'impression, des encres, des encres pour imprimantes à jet d'encre, des toners, des laques, des colorants, du papier, des bitumes, du béton et d'autres composants.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2404536
- WO 2005033217 A

- DE PS671739 C